# EUROPEAN PATENT APPLICATION

(11) **EP 0 655 293 A2**
(43) Date of publication of application: **31.05.1995**
(21) Application number: 94118603.3
(22) Date of filing: 25.11.1994
(51) Int. Cl.: B23K 26/00

(54) **Perfected process and system for producing column radiators**

(30) Priority: 25.11.1993 IT BO930472
(71) Applicant: IRSAP - IRSOL S.r.l., I-45031 ARQUA' POLESINE (IT)
(72) Inventor: Zen, Alessandro, I-45100 Rovigo (IT)
(74) Representative: Jorio, Paolo

(57) **Abstract**

A process for producing column radiators defined by two manifolds hydraulically connected by a number of columns; the process including in succession:
a step wherein the manifolds (2) and the columns (3) are placed inside a die (19);
a step wherein the die (19) is transferred by drive means (18) to a welding station (6);
a step wherein at least one laser head (8) is moved by drive means (12, 14, 15) up to the portions for welding; and
a step wherein, for each column (3), the laser head (8) CO2 laser welds the end edge of the column (3) to a hole formed in one face of the manifold (2).

## Description

The present invention relates to a perfected process and relative system for producing column radiators.

Column radiators comprise two manifolds connected hydraulically by a number of columns.

The process currently used for producing column radiators comprises:
a stage for producing the manifolds and columns, and forming a number of holes in the manifolds; and
a stage wherein the columns are placed between the manifolds, the manifolds are pressed firmly towards each other, and the axial ends of the columns are electrode welded or soldered to the edges of the holes formed in the manifolds.

The above process presents several drawbacks.

In particular, it results in the formation of unsightly weld beads which are difficult to remove; and in increased production cost due to the slow operating speed of the welding system.

It is an object of the present invention to provide a process for producing column radiators, designed to overcome the above drawbacks.

It is a further object of the present invention to provide a system for producing column radiators, and which also provides for overcoming the above drawbacks.

According to the present invention, there is provided a process for producing column radiators defined by two manifolds hydraulically connected by a number of columns; characterized in that it comprises:
a first step wherein said manifolds and said columns are placed inside a die;
a second step wherein said die is transferred by first drive means to a welding station;
a third step wherein second drive means move at least one laser head up to the portions for welding; and
a fourth step wherein, for each said column, said laser head provides for CO2 laser welding the end edge of said column to a hole formed in one face of said manifold.

According to the present invention, there is also provided a system for producing column radiators defined by two manifolds hydraulically connected by a number of columns; characterized in that it comprises:
a welding station;
at least one CO2 laser source;
at least one laser head;
an arm supporting said laser head;
first drive means for moving said arm along a first vertical longitudinal axis;
a body fitted to a frame and supporting said arm;
second drive means for moving said body along a second horizontal axis;
third drive means for moving said arm along a third horizontal axis;
a die housing said radiator;
fourth drive means for moving said die to and from said welding station; and
an electronic control unit for controlling operation of said drive means and said CO2 laser sources.

A preferred, non-limiting embodiment of the present invention will be described by way of example with reference to the accompanying drawings, in which:
Figures 1 and 2 show side views of a system implementing the process according to the teachings of the present invention;
Figure 3 shows a plan view of the Figure 1 system;

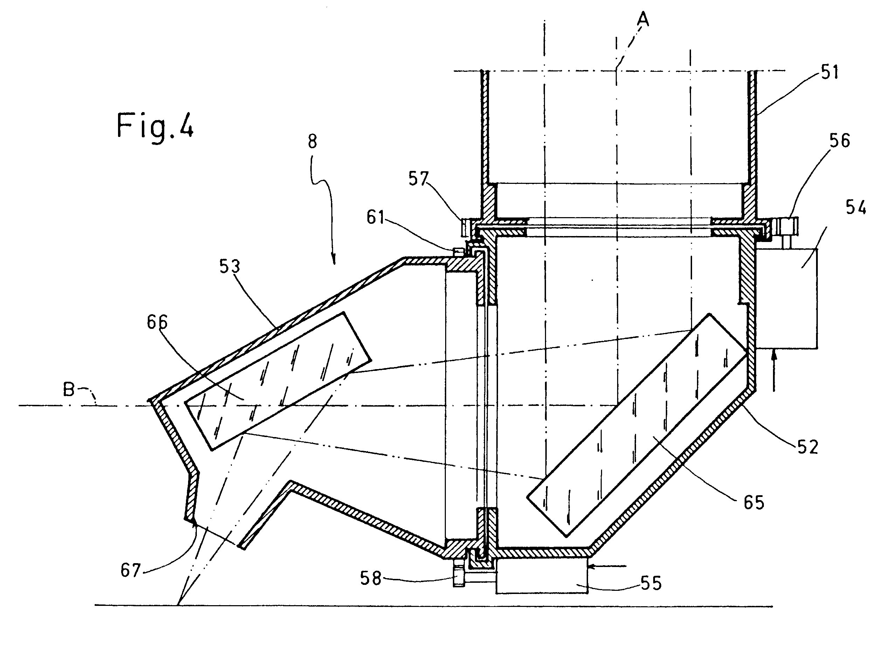

Figure 4 shows a larger-scale view of a Figure 1 system component;
Figures 5 and 6 show the path of a laser beam;
Figure 7 shows a side view of a column radiator.

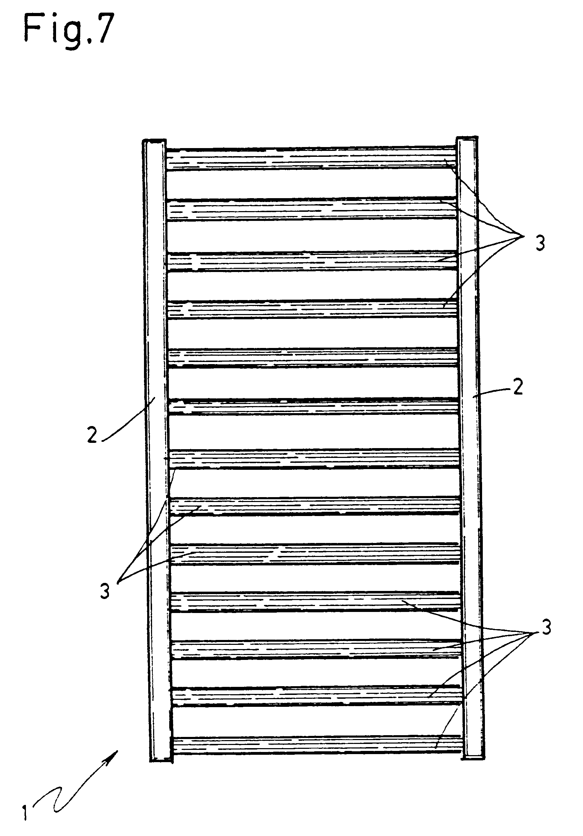

Number 1 in Figure 7 indicates a radiator defined by two parallel manifolds 2, and by a number of preferably cylindrical columns 3, the axial ends of which are connected to holes (not shown) formed in manifolds 2.

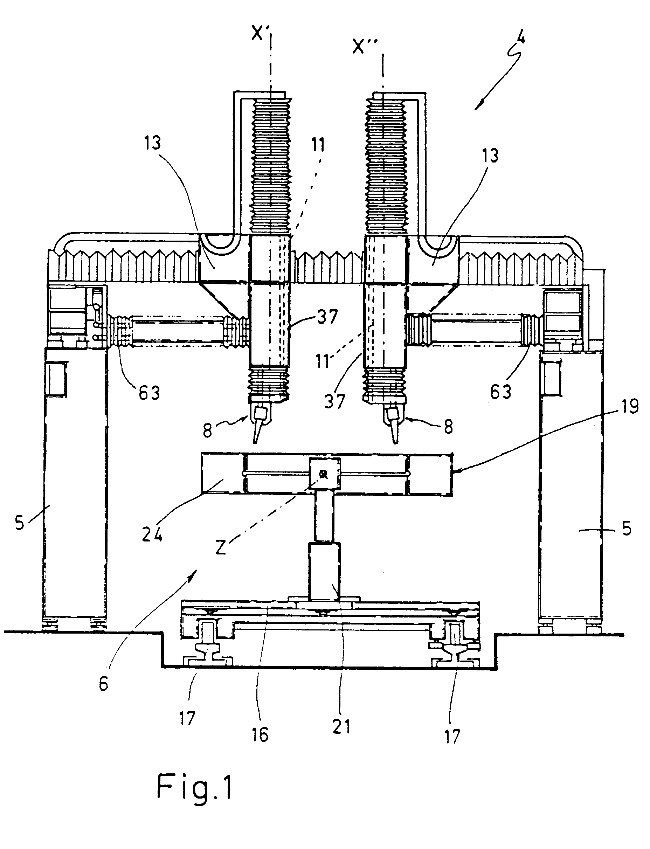

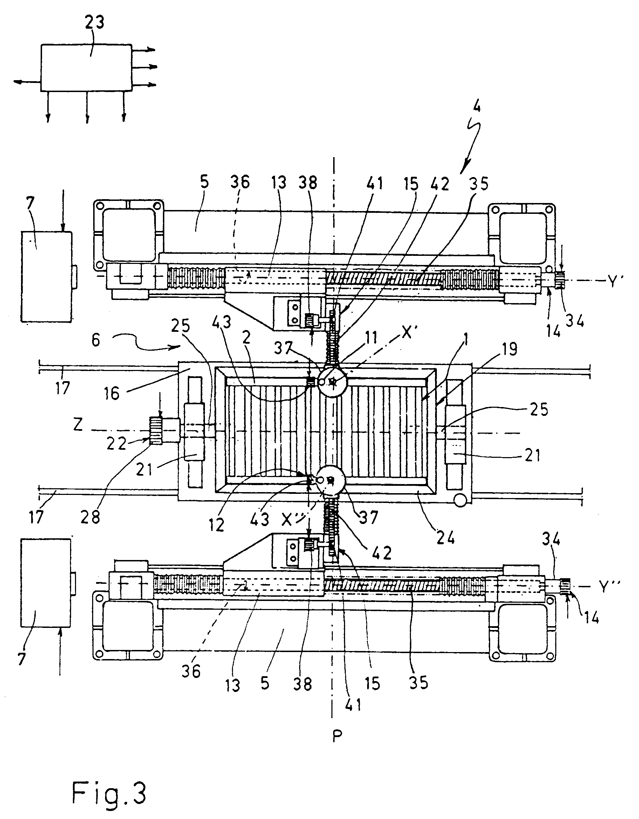

Number 4 in Figures 1, 2 and 3 indicates a system for producing radiators 1 and comprising:
two parallel frames 5;
a welding station 6 defined in the space between frames 5;
two CO2 laser sources 7, one for each frame 5;
two laser heads 8, one for each frame 5;
two arms 11 supporting respective laser heads 8;
drive means 12 for moving arms 11 along respective vertical longitudinal axes X' and X'';
two bodies 13, each fitted to a respective frame 5 and supporting a respective arm 11;
drive means 14 for moving bodies 13 along respective horizontal axes Y' and Y'';
drive means 15 for moving arms 11 along a horizontal axis P;
a platform 16 movable along two horizontal rails 17 located between frames 5 and presenting longitudinal axes parallel to axes Y' and Y'';
drive means 18 for moving platform 16 along rails 17;
a die 19 housing radiator 1 and fitted to platform 16 by means of two vertical bars 21;
drive means 22 for rotating die 19 and hence radiator 1 about a horizontal axis Z located centrally between axes Y' and Y''; and
an electronic control unit 23 for controlling operation of drive means 12, 14, 15, 18, 22 and CO2 laser sources 7.

Die 19 comprises a rectangular frame 24 housing radiator 1. Manifolds 2 are placed along the longer sides of frame 24, which are pressed towards each other, in a manner not shown, to maintain in position the columns 3 placed between manifolds 2. From each shorter side of frame 24, there extends outwards a shaft 25 of axis Z and housed, via the interposition of bearings (not shown), inside a hole (not shown) formed in respective bar 21. Drive means 22 comprise an electric motor 28, the casing of which is secured to one of bars 21, and the output shaft of which is angularly integral with one of shafts 25.

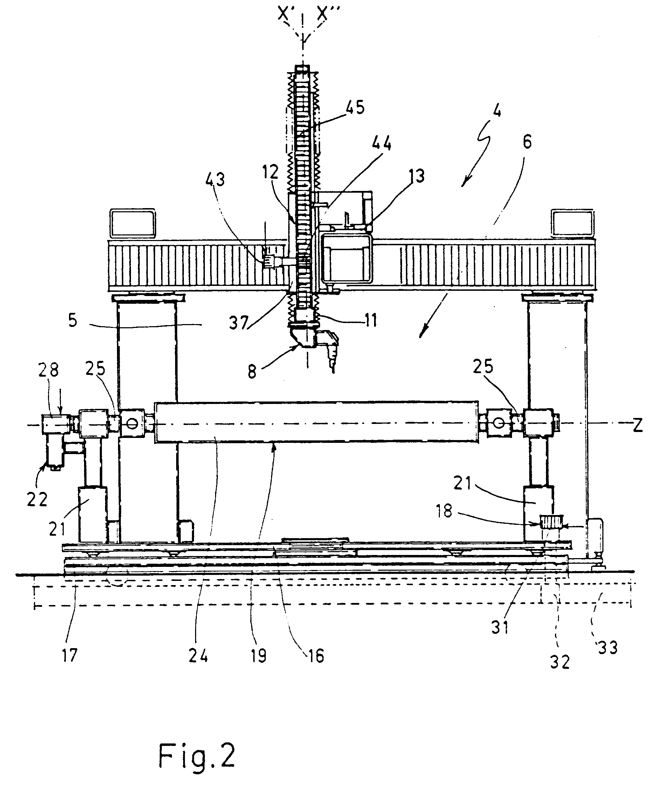

Drive means 18 comprise an electric motor 31 fitted to platform 16, and the output shaft of which is fitted, as shown schematically by the dotted lines in Figure 2, with a gear 32 meshing with a fixed rack 33 to the side of one of rails 17.

For each frame 5, drive means 14 comprise an electric motor 34, the output shaft of which is fitted with a worm screw 35 of axis Y', Y'' and meshing with a threaded hole 36 formed in body 13.

For each arm 11, drive means 15 comprise an electric motor 38, the casing of which is integral with respective body 13, and the output shaft of which is fitted with a gear 41 meshing with a rack 42 presenting axis P and integral with a tubular section 37 housing arm 11.

For each arm 11, drive means 12 comprise an electric motor 43, the casing of which is integral with respective tubular section 37, and the output shaft of which is fitted with a gear 44 meshing with a rack 45 integral with respective arm 11.

The above drive means may of course differ from those described and illustrated herein.

Laser head 8 comprises three hollow bodies 51, 52, 53. Body 51 is integral with respective arm 11 in a manner not shown; body 52 is fitted to body 51 but permitted to rotate about a vertical axis A parallel to axis X', X''; and body 53 is fitted to body 52 so as to rotate with it, but is also permitted to rotate freely about a horizontal axis B parallel to axis Y', Y''. Laser head 8 presents two electric motors 54 and 55 controlled by electronic control unit 23, and which provide for respectively rotating bodies 52 and 53. Motor 54 is fitted to body 52, and its output shaft presents a gear 56 meshing with a gear 57 formed on the bottom edge of body 51; while motor 55 is also fitted to body 52, and its output shaft presents a gear 58 meshing with a gear 61 formed on the edge of body 53.

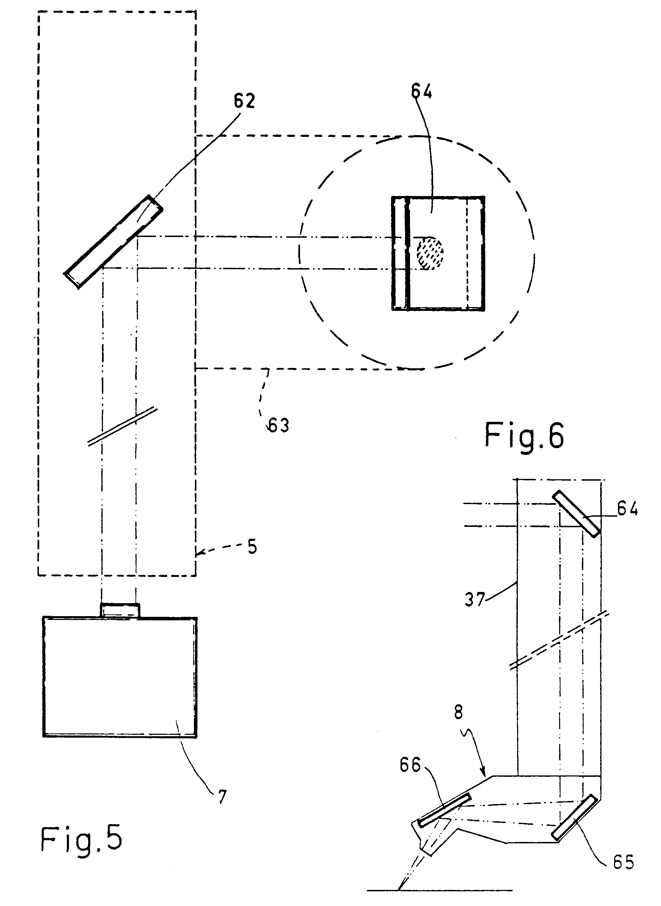

With reference to Figures 1, 5 and 6, the laser beam from laser source 7 is directed along frame 5 and parallel to axis Y', Y'' on to reflecting means 62 housed inside a first end, in turn housed inside frame 5, of an extensible bellows tube 63 lying in a horizontal plane and therefore presenting its longitudinal axis parallel to axis P and perpendicular to axis Y', Y'' and axis X', X''. Tube 63 is fitted integral with tubular section 37, and therefore moves with section 37 along axis Y', Y'', and varies its length as section 37 moves along axis P. As tube 63 moves parallel to itself, the portion of tube 63 inside frame 5 is guided by guide means (not shown) housed inside frame 5. Means 62 reflect the laser beam on to further reflecting means 64 housed inside and integral with tubular section 37; means 64 in turn reflect the laser beam along tubular section 37 and body 51 on to reflecting means 65 housed inside and integral with body 52; means 65 in turn reflect the laser beam on to reflecting means 66 housed inside and integral with body 53; and means 66 reflect the laser beam outwards of head 8 through an outlet 67 formed in body 53.

The process according to the teachings of the present invention comprises:
a first step for producing manifolds 2 and columns 3;
a second step wherein manifolds 2 and columns 3 are arranged inside frame 24 of die 19;
a third step wherein means 18 transfer die 19 to welding station 6;
a fourth step wherein means 12, 14 and 15 move laser heads 8 up to the portions for welding;
a fifth step wherein, on a first face of radiator 1, laser heads 8 successively weld end portions of columns 3 to respective holes formed in one face of manifolds 2;
a sixth step wherein die 19 is rotated 180° by drive means 22;
a seventh step wherein, on a second face of radiator 1, laser heads 8 successively weld second end portions of columns 3 to the respective holes formed in said face of manifolds 2; and
an eighth step wherein die 19 is transferred by drive means 18 to an unloading station.

At the fifth and seventh steps, i.e. during welding, motors 54 and 55 are operated to vary the direction of the laser beam, and more specifically to direct the beam on to the edge of the end section of columns 3 and to accompany the edge at a predetermined speed.

The advantages of the present invention are as follows.

In particular, the process according to the invention provides for CO2 laser welding the component parts of the radiator, which technique presents the definite advantage of supplying a considerable amount of power per unit of area in localized regions of the workpiece. As such, the regions surrounding the weld line are subjected to practically no heating, thus reducing thermal fatigue of the material and safeguarding the mechanical characteristics of the workpiece. Moreover, CO2 laser welding provides for extremely small weld beads (according to tests, roughly 1 mm thick) thus eliminating finish machining; and for extremely high-speed welding (roughly 10 times faster than at present). Also, being by now an established technique, CO2 laser welding systems are extremely reliable, involve very little maintenance, and present easily predictable running costs which are further reduced by automatic operation of the system implementing the process.

Clearly, changes may be made to the process and system as described and illustrated herein without, however, departing from the scope of the present invention.

In particular, the radiator may be welded either horizontally, in which case the laser heads weld opposite sides of the radiator, or vertically, in which case the laser heads weld the same side but opposite faces of the radiator.

## Claims

1. A process for producing column radiators (1) defined by two manifolds (2) hydraulically connected by a number of columns (3); characterized in that it comprises:
a first step wherein said manifolds (2) and said columns (3) are placed inside a die (19);
a second step wherein said die (19) is transferred by first drive means (18) to a welding station (6);
a third step wherein second drive means (12, 14, 15) move at least one laser head (8) up to the portions for welding; and
a fourth step wherein, for each said column (3), said laser head (8) provides for CO2 laser welding the end edge of said column (3) to a hole formed in one face of said manifold (2).

2. A process as claimed in Claim 1, characterized in that said fourth step comprises:
a step wherein said laser head (8) welds the end edges of each said column (3) on a first face of said radiator (1);
a step wherein said die (19) is rotated 180° by third drive means (22); and
a step wherein said laser head (8) welds the end edges of each said column (3) on a second face of said radiator (1).

3. A system for producing column radiators (1) defined by two manifolds (2) hydraulically connected by a number of columns (3); characterized in that it comprises:
a welding station (6);
at least one CO2 laser source (7);
at least one laser head (8);
an arm (11) supporting said laser head (8);
first drive means (12) for moving said arm (11) along a first vertical longitudinal axis (X', X'');
a body (13) fitted to a frame (5) and supporting said arm (11);
second drive means (14) for moving said body (13) along a second horizontal axis (Y', Y'');
third drive means (15) for moving said arm (11) along a third horizontal axis (P);
a die (19) housing said radiator (1);
fourth drive means (18) for moving said die (19) to and from said welding station (6); and
an electronic control unit (23) for controlling operation of said drive means (12, 14, 15, 18) and said CO2 laser sources (7).

4. A system as claimed in Claim 3, characterized in that it comprises:
two parallel frames (5);
said welding station (6) defined in the space between said frames (5);
two said CO2 laser sources (7), one for each said frame (5);
two said laser heads (8), one for each said frame (5);
two said arms (11) for supporting respective said laser heads (8);
said first drive means (12) for moving said arms (11) along respective said longitudinal axes (X', X'');
two said bodies (13) fitted to respective said frames (5) and supporting respective said arms (11);
said second drive means (14) for moving said bodies (13) along respective said second axes (Y', Y'');
said third drive means (15) for moving said arms (11) along said third axis (P);
a platform (16) movable along a horizontal axis parallel to said second axes (Y', Y'') and supporting said die (19);
said fourth drive means (18) for moving said platform (16) to and from said welding station (6); and
fifth drive means (22) controlled by said control unit (23) and for rotating said die (19), and hence said radiator (1), about a fourth horizontal axis (Z) located centrally between said second axes (Y', Y'').

5. A system as claimed in Claim 3 and/or 4, characterized in that said laser head (8) comprises three hollow bodies (51, 52, 53), of which a first hollow body (51) is integral with the respective said arm (11); a second hollow body (52) is fitted to said first hollow body (51) but permitted to rotate, via sixth drive means (54), about a fifth vertical axis (A) parallel to said first axis (X', X''); and a third hollow body (53) is fitted to and rotates with said second hollow body (52), but is also permitted to rotate, via seventh drive means (55), about a sixth horizontal axis (B) parallel to said second axis (Y', Y''); said third hollow body (53) presenting a laser beam outlet (67); and said sixth (54) and seventh (55) drive means being controlled by said control unit (23).
